# EUROPÄISCHE PATENTSCHRIFT

(11) **EP 2 875 268 B1**
(45) Veröffentlichungstag und Bekanntmachung des Hinweises auf die Patenterteilung: **20.02.2019**
(21) Anmeldenummer: 13728968.2
(22) Anmeldetag: 08.06.2013
(51) Int. Cl.: F16K 11/07, F16K 37/00

(54) **HYDRAULIKSYSTEM MIT EINER DRUCKWAAGE IN FORM EINES VENTILS, INSBESONDERE EINES STETIGVENTILS**
HYDRAULIC SYSTEM WITH PRESSURE COMPENSATOR IN FORM OF A VALVE, IN PARTICULAR CONTINUOUSLY ADJUSTABLE VALVE
SYSTÈME HYDRAULIQUE AVEC DISPOSITIF COMPENSATEUR SOUS FORME D'UNE VANNE, EN PARTICULIER VANNE PROPORTIONNELLE

(30) Priorität: 19.07.2012 DE 102012014250
(43) Veröffentlichungstag der Anmeldung: 27.05.2015
(73) Patentinhaber: HYDAC Systems & Services GmbH, 66280 Sulzbach (DE)
(72) Erfinder: HONSBEIN, Rüdiger, 66822 Lebach-Dörsdorf (DE)
(74) Vertreter: Bartels und Partner, Patentanwälte
(86) Internationale Anmeldenummer: PCT/EP2013/001686
(87) Internationale Veröffentlichungsnummer: WO 2014/012608

(56) Entgegenhaltungen:
- EP-A1- 2 375 115
- WO-A1-2005/098299
- WO-A1-2011/154056
- WO-A2-2005/027162
- DE-A1-102007 051 039
- US-A- 4 593 719
- US-A- 5 235 746

## Beschreibung

Die Erfindung betrifft ein Hydrauliksystem mit einer Druckwaage in Form eines Ventils, insbesondere Stetigventils zur Regelung eines Volumenstroms bei strömungsfähigen Medien wie Hydraulikfluid, mit den Merkmalen im Oberbegriff von Anspruch 1.

Ventile dieser Art kommen für Zwecke der Stromregelung, insbesondere als Wegeventile, bei den verschiedensten Arten von Fluidsystemen, insbesondere Hydrauliksystemen, zum Einsatz. Bei Systemen, bei denen Ventile Steuerfunktionen ausüben, die für einen einwandfreien und sicheren Betrieb des Systems ausschlaggebend sind, ist es vorteilhaft, wenn die Möglichkeit besteht, den Betriebszustand betreffender Ventile zu überwachen. Die US 4 593 719 offenbart ein Proportionalwegeventil, insbesondere ein Stetigventil zur Regelung eines Volumenstroms bei strömungsfähigen Medien, wie Hydraulikfluid, mit einem Ventilkolben, der in einer Ventilbohrung eines Ventilgehäuses in Axialrichtung verfahrbar ist und zumindest eine Steuerkante zur Steuerung mindestens eines Strömungsweges zwischen Medienanschlüssen des Ventilgehäuses aufweist, wobei eine Wegmesseinrichtung vorgesehen ist, die eine Anzeige der Weglänge von Verfahrbewegungen des Ventilkolbens liefert.

Weitere Proportionalwegeventile mit Wegmesssystemen gehen aus der EP 2 375 115 A1, der WO 2011/154056 A1, der DE 10 2007 051 039 A1, der US 5 235 746 und der WO 2005/098299 A1 hervor.

Im Hinblick auf diese Problematik liegt der Erfindung die Aufgabe zugrunde, ein Hydrauliksystem zur Verfügung zu stellen, das dem Bedürfnis nach einer vollautomatischen Betriebsüberwachung entgegenkommt.

Erfindungsgemäß ist diese Aufgabe durch ein Hydrauliksystem gelöst, das die Merkmale des Patentanspruchs 1 in seiner Gesamtheit aufweist.

Demgemäß zeichnet sich das erfindungsgemäße Hydrauliksystem dadurch aus, dass eine Wegmesseinrichtung vorgesehen ist, die eine Anzeige der Weglänge von Verfahrbewegungen des Ventilkolbens liefert. Dadurch ist nicht nur eine Betriebsüberwachung aus Sicherheitsaspekten, d.h. eine Überwachung auf Betriebsfähigkeit betreffender Ventile möglich, sondern es besteht auch die vorteilhafte Möglichkeit, bei komplexen Systemen, etwa bei hydraulischen Lenk-, Brems- oder Federungssystemen, wichtige Erkenntnisse über das dynamische Betriebsverhalten des Systems zu gewinnen.

In besonders vorteilhafter Weise kann eine die Weglänge der Verfahrbewegungen des Ventilkolbens berührungsfrei erkennende Wegmesseinrichtung vorgesehen sein. Dadurch kann eine Messeinrichtung verwirklicht werden, ohne große bauliche Veränderungen seitens des eigentlichen Ventils vornehmen zu müssen.

Mit besonderem Vorteil kann diesbezüglich so vorgegangen werden, dass eine die Weglängen induktiv nach dem LVDT-Prinzip (Linear Voltage Differential Transformer) erkennende Wegmesseinrichtung vorgesehen ist, die Induktionsspulen aufweist, mit denen vorzugsweise ein Ferritkern magnetisch gekoppelt ist, der entsprechend der Bewegungen des Ventilkolbens relativ zu den Spulen bewegbar ist. Dadurch steht für eine Auswerteelektronik eine von der Position des Ferritkernes linear abhängige Spannung zur Verfügung. Anstelle eines Ferritkernes können vergleichbar wirkende Einrichtungen eingesetzt werden.

Die Gewinnung einer derartigen Messsignalspannung gestaltet sich besonders einfach, wenn die Wegmesseinrichtung auf einem Spulenkörper zwei Spulenabschnitte als Spulenhälften einer Halbbrückenschaltung aufweist, wobei ein mit dem Ventilkolben mechanisch gekoppelter Ferritkern im Spulenkörper bewegbar ist.

Bei besonders vorteilhaften Ausführungsbeispielen weist die Wegmesseinrichtung ein Gehäuse auf, das an einem Ende der Ventilbohrung des Ventilgehäuses angeordnet ist und in das sich eine mit dem zugewandten Ende des Ventilkolbens verbundene Betätigungsstange erstreckt, an deren Ende der Ferritkern angebracht ist. Auf diese Weise ist eine besonders einfache, raumsparende Bauweise der Wegmesseinrichtung realisierbar.

Diesbezüglich kann die Anordnung mit Vorteil so getroffen sein, dass das Gehäuse der Wegmesseinrichtung eine eine mediendichte Abdichtung der Ventilbohrung nach außen bildende Hülse aufweist, in der die Betätigungsstange mit dem Ferritkern axial bewegbar ist und auf der der Spulenkörper angeordnet ist. Dadurch ist eine besonders kompakte Baueinheit aus Ventilgehäuse und Wegmesseinrichtung realisierbar.

Bei besonders bevorzugten Ausführungsformen weist das Gehäuse der Wegmesseinrichtung ein Anbringteil auf, das am zugeordneten Ende der Ventilbohrung unter Bildung einer Abdichtung anbringbar ist und einen Durchgang für die Betätigungsstange bildet, wobei das offene Ende der Hülse im Durchgang, unter Bildung einer Abdichtung zwischen diesem und der Außenseite der Hülse, angebracht ist. Das Anbringteil des Gehäuses der Wegmesseinrichtung kann als Einschraubteil unmittelbar in ein Innengewinde am Ende der Ventilbohrung des Ventilgehäuses eingeschraubt sein, wobei ein Dichtring die Abdichtung der Verschraubung bilden kann.

Die Messeinrichtung kann in vorteilhafter Weise eine abgeschlossene Baueinheit bilden, indem das Gehäuse der Wegmesseinrichtung ein sich an das Anbringteil anschließendes Anschlussteil aufweist, das den Spulenkörper umgibt und eine Auswerteelektronik und elektrische Anschlusseinrichtungen enthält.

Nachstehend ist die Erfindung anhand eines in der Zeichnung dargestellten Ausführungsbeispiels im Einzelnen erläutert. Es zeigen:
- Fig. 1: eine schematische Darstellung der elektrischen Grundschaltung einer induktiven Wegmesseinrichtung mit einer zwei Induktionsspulen aufweisenden Halbbrückenschaltung; und
- Fig. 2: einen Längsschnitt eines Ausführungsbeispiels des erfindungsgemäßen Ventils in Form einer Druckwaage für ein Hydrauliksystem.

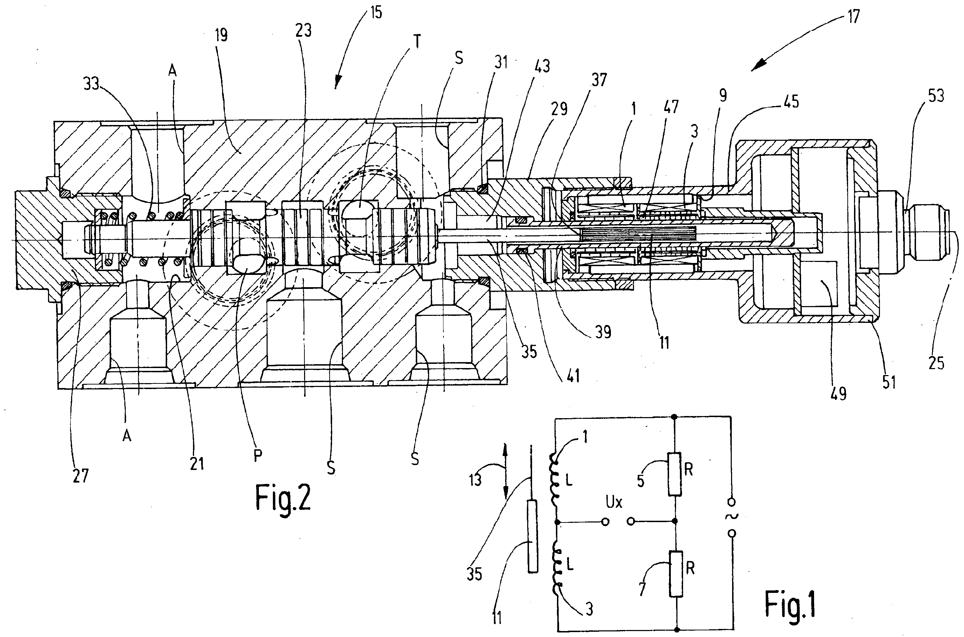

Die Fig. 1 zeigt die vereinfachte Grundschaltung einer induktiven Halbbrücke für eine Wegmessung nach dem sogenannten LVDT-System (Linear Voltage Differential Transformer), mit zwei Induktionsspulen 1 und 3, die sich als gleichsinnig gewickelte Spulenabschnitte auf einem Spulenkörper 9 (Fig. 2) befinden. Die Induktionsspulen 1 und 3 bilden eine Halbbrücke in Verbindung mit Brückenwiderständen 5 und 7. Ein innerhalb des Spulenkörpers 9 axial bewegbarer Kern aus einem hochpermeablen, ferromagnetischen oder vergleichbar wirkenden Material, vorliegend in Form eines Ferritkernes 11, bewirkt bei den in Fig. 1 mit Doppelpfeil 13 bezeichneten Bewegungen Änderungen der Induktivitätsverteilung in den beiden Spulen 1, 3. Bei einer Erregung der Spulen 1, 3 mit einer Wechselspannung ergibt sich dadurch eine von der Position des Ferritkernes 11 linear abhängige Brückenspannung Uₓ, die durch eine Elektronikschaltung in ein wegproportionales Signal umwandelbar ist.

Die Fig. 2 zeigt ein Ausführungsbeispiel eines erfindungsgemäßen Ventils 15, das mit einer nach diesem LVDT-Prinzip arbeitenden Wegmesseinrichtung 17 versehen ist. Bei dem dargestellten Ausführungsbeispiel des Ventils 15 handelt es sich um eine Druckwaage, die in einem Hydrauliksystem, das nicht dargestellt ist, das Druckniveau eines Druckspeichers in Abhängigkeit vom Lastdruck eines Verbrauchers steuert. Das Ventil 15 weist als Schieberventil ein Ventilgehäuse 19 und eine Ventilbohrung 21 auf, in der ein Ventilkolben 23 längs einer Verfahrachse 25 verschiebbar geführt ist. Die Ventilbohrung 21 ist am einen Ende durch einen Gewindestopfen 27 dicht verschlossen. Am anderen Ende ist in die Ventilbohrung 21 ein Anbringteil 29 eingeschraubt, wobei die Verschraubung durch einen Dichtring 31 abgedichtet ist. Der Ventilkolben 23 ist durch eine Federanordnung 33 in die in Fig. 2 gezeigte Mittelstellung zentriert, in der ein Druckanschluss P am Ventilgehäuse 19 gesperrt ist. Am Ventilgehäuse 19 sind Verbraucheranschlüsse mit A, Speicheranschlüsse mit S und ein Tankanschluss mit T bezeichnet. Durch am linksseitigen Ende des Ventilkolbens 23 wirkenden Lastdruck am Verbraucheranschluss A kann sich der Ventilkolben 23 gegen den am anderen Kolbenende wirkenden Speicherdruck der Speicheranschlüsse S in Fig. 2 nach rechts bewegen, wodurch die Verbindung zwischen Druckanschluss P und Speicheranschlüssen S für einen Ladevorgang des (nicht gezeigten) Speichers eingeleitet wird. Andererseits bewirkt überwiegender Speicherdruck eine Verschiebung des Ventilkolbens 23 nach links, wodurch eine Entlastung des Speichers von den Speicheranschlüssen S zum Tankanschluss T ermöglicht wird.

An dem der Wegmesseinrichtung 17 zugewandten Ende des Ventilkolbens 23 ist an diesem eine zur Verfahrachse 25 koaxiale Betätigungsstange 35 befestigt. Diese ist aus einem magnetisch nicht aktiven Metall, wie einem nichtmagnetischen Edelstahl, gebildet. Am Ende 37 der Betätigungsstange 35 ist der als Positionsgeber der Wegmesseinrichtung 17 dienende Ferritkern 11 befestigt, beispielsweise angeklebt. Die aus Betätigungsstange 35 und Ferritkern 11 gebildete Einheit erstreckt sich durch eine Hülse 39, die ebenfalls aus einem nichtmagnetischen Metall gebildet und an dem vom Ventilkolben 23 entfernten Ende geschlossen ist. Das andere, offene Ende der Hülse 39 ist am Anbringteil 29 fest angebracht, wobei die Außenseite der Hülse 39 durch ein Dichtelement 41 relativ zu dem den Speicherdruck führenden Durchgangsraum 43 des Anbringteils 29 abgedichtet ist.

An das Anbringteil 29 schließt sich zur Vervollständigung des Gehäuses der Wegmesseinrichtung 17 ein Anschlussteil 45 an. Innerhalb dieses Anschlussteils 45 befindet sich auf der Hülse 39 ein Spulenkörper 47, auf dem sich die Spulen 1 und 3 als gleichsinnig gewickelte Spulenhälften für die Halbbrückenschaltung von Fig. 1 befinden. Die zugehörigen elektrischen Leitungen, die in Fig. 2 nicht dargestellt sind, sind mit den zugeordneten, ebenfalls nicht dargestellten elektrischen Schaltungskomponenten verbunden, zu denen eine Schaltungsplatine 49 gehört, die sich in einem Endteil 51 des Anschlussteils 45 befindet, an dem auch ein elektrischer Anschlussstecker 53 angebracht ist.

## Patentansprüche

1. Hydrauliksystem mit einer Druckwaage in Form eines Ventils, insbesondere eines Stetigventils (15) zur Regelung eines Volumenstroms bei strömungsfähigen Medien, wie Hydraulikfluid, mit einem Ventilkolben (23), der in einer Ventilbohrung (21) eines Ventilgehäuses (19) in Axialrichtung verfahrbar ist und zumindest eine Steuerkante zur Steuerung mindestens eines Strömungsweges zwischen Medienanschlüssen (A, P, S, T) des Ventilgehäuses (19) aufweist, **dadurch gekennzeichnet, dass** eine Wegmesseinrichtung (17) vorgesehen ist, die eine Anzeige der Weglänge von Verfahrbewegungen des Ventilkolbens (23) liefert.

2. Hydrauliksystem nach Anspruch 1, **dadurch gekennzeichnet, dass** eine die Weglänge der Verfahrbewegungen des Ventilkolbens (23) berührungsfrei erkennende Wegmesseinrichtung (17) vorgesehen ist.

3. Hydrauliksystem nach einem der vorstehenden Ansprüche, **dadurch gekennzeichnet, dass** eine die Weglängen induktiv nach dem LVDT-Prinzip erkennende Wegmesseinrichtung (17) vorgesehen ist, die Induktionsspulen (1, 3) aufweist, mit denen ein Ferritkern (11) magnetisch gekoppelt ist, der entsprechend der Bewegungen des Ventilkolbens (23) relativ zu den Spulen (1, 3) bewegbar ist.

4. Hydrauliksystem nach einem der vorstehenden Ansprüche, **dadurch gekennzeichnet, dass** die Wegmesseinrichtung (17) auf einem Spulenkörper (47) mindestens zwei Spulenabschnitte (1, 3) als Spulenhälften einer Halbbrückenschaltung aufweist und dass ein mit dem Ventilkolben (23) mechanisch gekoppelter Ferritkern (11) im Spulenkörper (47) bewegbar ist.

5. Hydrauliksystem nach einem der vorstehenden Ansprüche, **dadurch gekennzeichnet, dass** die Wegmesseinrichtung (17) ein Gehäuse (29, 45) aufweist, das an einem Ende der Ventilbohrung (21) des Ventilgehäuses (19) angeordnet ist und in das sich eine mit dem zugewandten Ende des Ventilkolbens (23) verbundene Betätigungsstange (35) erstreckt, an deren Ende (37) der Ferritkern (11) angebracht ist.

6. Hydrauliksystem nach Anspruch 5, **dadurch gekennzeichnet, dass** im Gehäuse (29, 45) der Wegmesseinrichtung (17) eine eine mediendichte Abdichtung der Ventilbohrung (21) nach außen bildende Hülse (39) vorgesehen ist, in der die Betätigungsstange (35) mit dem Ferritkern (11) axial bewegbar ist und auf der der Spulenkörper (47) der Spulen (1, 3) angeordnet ist.

7. Hydrauliksystem nach Anspruch 6, **dadurch gekennzeichnet, dass** das Gehäuse (29, 45) der Wegmesseinrichtung (17) ein Anbringteil (29) aufweist, das am zugeordneten Ende der Ventilbohrung (21) unter Bildung einer Abdichtung (31) anbringbar ist und einen Durchgangsraum (43) für die Betätigungsstange (35) bildet, und dass das offene Ende der Hülse (39) im Durchgangsraum (43), unter Bildung einer Abdichtung (41) zwischen diesem und der Außenseite der Hülse (39), angebracht ist.

8. Hydrauliksystem nach einem der vorstehenden Ansprüche 5-7, **dadurch gekennzeichnet, dass** das Gehäuse (29, 45) der Wegmesseinrichtung (17) ein sich an das Anbringteil (29) anschließendes Anschlussteil (45) aufweist, das den Spulenkörper (47) umgibt und eine Auswerteelektronik (49) und elektrische Anschlusseinrichtungen, einschließlich eines Anschlusssteckers (53), enthält.

## Claims

1. A hydraulic system with a pressure maintenance valve in the form of a valve, in particular a continuously adjustable valve (15) for regulating a volume flow of flowable media such as hydraulic fluid, with a valve piston (23) which can be displaced in axial direction in a valve bore (21) of a valve housing (19) and has at least one control edge for controlling at least one flow path between media ports (A, P, S, T) of the valve housing (19), **characterised in that** a travel measurement device (17) is provided which provides a display of the length of travel of displacement movements of the valve piston (23).

2. The hydraulic system according to claim 1, **characterised in that** a travel measurement device (17) is provided which contactlessly recognises the length of travel of the displacement movements of the valve piston (23).

3. The hydraulic system according to one of the preceding claims, **characterised in that** a travel measurement device (17) which recognises the lengths of travel inductively according to the LVDT principle is provided, which has induction coils (1, 3) to which a ferrite core (11) is magnetically coupled, which core can be moved according to the movements of the valve piston (23) relative to the coils (1, 3).

4. The hydraulic system according to one of the preceding claims, **characterised in that** the travel measurement device (17) has, on a coil body (47), at least two coil sections (1, 3) as coil halves of a half-bridge configuration, and that a ferrite core (11) magnetically coupled to the valve piston (23) can be moved in the coil body (47).

5. The hydraulic system according to one of the preceding claims, **characterised in that** the travel measurement device (17) has a housing (29, 45) which is arranged at one end of the valve bore (21) of the valve housing (19) and in which an actuation rod (35) connected to the facing end of the valve piston (23) extends, to the end (37) of which the ferrite core (11) is attached.

6. The hydraulic system according to claim 5, **characterised in that** a sleeve (39) forming, to the outside, a media-tight seal of the valve bore (21), is provided in the housing (29, 45) of the travel measurement device (17), in which sleeve the actuation rod (35) can be moved axially with the ferrite core (11) and on which the coil body (47) of the coils (1, 3) is arranged.

7. The hydraulic system according to claim 6, **characterised in that** the housing (29, 45) of the travel measurement device (17) has an attachment part (29) which can be attached to the associated end of the valve bore (21) accompanied by the formation of a seal (31) and forms a passage room (43) for the actuation rod (35), and that the open end of the sleeve (39) is attached in the passage room (43), accompanied by the formation of a seal (41) between this and the outer side of the sleeve (39).

8. The hydraulic system according to one of the preceding claims 5-7, **characterised in that** the housing (29, 45) of the travel measurement device (17) has a connecting part (45) connecting to the attachment part (29), which part surrounds the coil body (47) and contains evaluation electronics (49) and electrical connecting devices, including a connecting plug (53).

## Revendications

1. Système hydraulique, comprenant un dispositif compensateur de pression sous la forme d'une vanne, notamment d'une vanne (15) à réglage continu, pour réguler un courant en volume pour des milieux aptes à s'écouler, comme un fluide hydraulique, comprenant un piston (23) de vanne, qui peut se déplacer dans la direction axiale dans un alésage (21) d'un corps (19) de vanne et qui a au moins une arête de commande pour commander au moins un trajet d'écoulement entre des raccords (A, P, S, T) pour des milieux du corps (19) de la vanne, **caractérisé en ce qu'**il est prévu un dispositif (17) de mesure de parcours, qui fournit une indication sur les longueurs de parcours de déplacements du piston (23) de la vanne.

2. Système hydraulique suivant la revendication 1, **caractérisé en ce qu'**il est prévu un dispositif (17) de mesure de parcours détectant, sans contact, les longueurs de parcours des déplacements du piston (23) de la vanne.

3. Système hydraulique suivant l'une des revendications précédentes, **caractérisé en ce qu'**il est prévu un dispositif (17) de mesure de parcours détectant les longueurs de parcours inductivement suivant le principe LVDT, qui a des bobines (1, 3) d'induction, auxquelles est couplé magnétiquement un noyau (11) de ferrite, qui peut se déplacer par rapport aux bobines (1, 3), conformément au déplacement du piston (23) de la vanne.

4. Système hydraulique suivant l'une des revendications précédentes, **caractérisé en ce que** le dispositif (17) de mesure de parcours a, sur un corps (47) de bobine, au moins deux parties (1, 3) de bobine sous forme de demi-bobines d'un circuit en demi-pont et **en ce qu'**un noyau (11) de ferrite couplé mécaniquement au piston (23) de la vanne est mobile dans le corps (47) de bobine.

5. Système hydraulique suivant l'une des revendications précédentes, **caractérisé en ce que** le dispositif (17) de mesure de parcours a un boîtier (29, 45), qui est disposé à une extrémité de l'alésage (21) du corps (19) de la vanne et dans lequel s'étend une barre (35) d'actionnement, qui est reliée à l'extrémité, tournée vers elle, du piston (23) de la vanne et à l'extrémité (37) de laquelle est mis le noyau (11) de ferrite.

6. Système hydraulique suivant la revendication 5, **caractérisé en ce que**, dans le boîtier (29, 45) du dispositif (17) de mesure de parcours, est prévue une douille (39), qui forme vers l'extérieur une étanchéité étanche aux milieux de l'alésage (21) de la vanne, dans laquelle la barre (35) d'actionnement est mobile axialement avec le noyau (11) de ferrite et sur laquelle est monté le corps (47) des bobines (1, 3).

7. Système hydraulique suivant la revendication 6, **caractérisé en ce que** le boîtier (29, 45) du dispositif (17) de mesure de parcours a une partie (29) d'application, qui peut être mise à l'extrémité associée de l'alésage (21) de la vanne en formant une étanchéité (31) et qui forme un espace (43) de passage de la barre (35) d'actionnement, et **en ce que** l'extrémité ouverte de la douille (39) est mise dans l'espace (43) de passage, avec formation d'une étanchéité (41) entre celui-ci et le côté extérieur de la douille (39).

8. Système hydraulique suivant l'une des revendications précédentes 5 à 7, **caractérisé en ce que** le boîtier (29, 45) du dispositif (17) de mesure de parcours a une partie (45) de raccord, qui se raccorde à la partie (29) d'application, qui entoure le corps (47) de bobine et qui comporte une électronique (49) d'exploitation et des dispositifs de connexion électrique, y compris une fiche (53) de connexion.
